# EUROPÄISCHE PATENTSCHRIFT

(11) **EP 1 714 839 B1**
(45) Veröffentlichungstag und Bekanntmachung des Hinweises auf die Patenterteilung: **16.01.2008**
(21) Anmeldenummer: 05008834.3
(22) Anmeldetag: 22.04.2005
(51) Int. Cl.: B60R 21/13

(54) **Vorrichtung zur Verriegelung und schnellen Entriegelung von beweglichen Bauteilen**
Apparatus for locking and fast unlocking of movable parts
Appareil pour vérroullier et dévérroullier des éléments mobiles

(43) Veröffentlichungstag der Anmeldung: 25.10.2006
(73) Patentinhaber: THOMAS MAGNETE GmbH, 57582 Herdorf (DE)
(72) Erfinder: Hamm, Wolfgang, 57520 Mauden (DE); Grünschlag, Jochen, 57567 Daaden (DE); Möller-Gaden, Jörg, 57080 Siegen (DE); Ermert, Markus, 57299 Burbach (DE); Lotz, Ulrich, 57290 Neunkirchen (DE); Stockschläder, Michael, 57562 Herdorf (DE); Becker, Christian, 57290 Neunkirchen (DE); Bender, Rolf, 57080 Siegen (DE); Overkott, Horst-Walter, 57586 Weitefeld (DE)
(74) Vertreter: Köchling, Conrad-Joachim

(56) Entgegenhaltungen:
- EP-A- 1 227 012
- DE-A1- 19 830 407
- DE-B3- 10 346 402
- US-B1- 6 675 692

## Beschreibung

Die Erfindung betrifft eine Vorrichtung zur Verriegelung und schnellen Entriegelung von beweglichen Bauteilen, bestehend aus einem Aktor, insbesondere einem Elektromagneten mit Stößel, und einem Klinkengesperre, welches einerseits mit dem Aktor oder dem Stößel und andererseits mit dem beweglichen Bauteil gekoppelt oder wirkverbunden ist, wobei die Klinken des Klinkengesperres um gestellfeste Achsen drehbeweglich sind und die Vorrichtungsbestandteile in einem Gehäuse angeordnet sind, welches ortsfest montierbar und dem beweglichen Bauteil zuzuordnen ist, wobei die Vorrichtung wahlweise eine Ansteuerelektronik umfasst, wobei das Gehäuse eine dem Aktor oder Elektromagneten formmäßig angepasste Konturierung aufweist, in welcher der Aktor oder Elektromagnet unbeweglich und unverschieblich gehalten ist, im Gehäuse Lagerstellen für sämtliche Klinken des Klinkengesperres ausgebildet sind, um welche die Klinken begrenzt drehbar gelagert sind und an denen die Klinken befestigt sind und wobei das Gehäuse eine Aussparung zum Eingriff eines mit einer Verriegelungsklinke in Eingriff bringbaren Bauteils aufweist.

Eine derartige gattungsgemäße Vorrichtung ist aus der DE 198 30 407 A1 bekannt.

Aus der US-B1- 6 675 692 ist ein pyrotechnischer Aktor bekannt, der in einem Gehäuse angeordnet ist, wobei am Gehäuse Stecker vorgesehen sind, die einem externen Anschlussmittel angepasst sind.

Derartige Vorrichtungen sind beispielsweise in der DE 198 21 594 C2 und der EP 1 488 965 A1 beschrieben.

Solche vorrichtungen dienen zur Auslösung von schnellbeweglichen Baueinheiten, insbesondere von Sicherheitsbauteilen. So ist der Einsatz beispielsweise zur Auslösung eines Überrollbügels von Kraftfahrzeugen, einer Kopfstütze, einer Stoßstange, eines Gurtstraffers, einer Sitz-Verstellung, - entriegelung oder auch einer verstellung von Karosserieteilen, zum Beispiel Motorhaube, Kofferraumdeckel, verdeck, Türen oder dergleichen von Kraftfahrzeugen im Crashfall oder bei Komfortentriegelungen bekannt. Aus der DE 198 21 594 ist es bekannt, die Bestandteile des Klinkengesperres an einer Halterung zu befestigen. Der Aktor ist dabei durch einen Elektromagneten gebildet, der über einem Sensor oder Schalter angesteuert ist, so dass sich bei einem entsprechenden Impuls oder Signal der Stößel des Magnetankers aus dem Elektromagneten heraus bewegt und auf das Klinkengesperre derart einwirkt, dass ein durch das Klinkengesperre gehaltenes Bauteil freigegeben wird, welches unter der Kraft einer vorgespannten Feder oder unter der Wirkung einer äußeren Kraft sich entsprechend verlagern kann.

Aus der EP 1 488 965 A1 ist es bekannt, das Klinkengesperre und den Aktor in einem Modul anzuordnen, welches als geschlossener Kasten ausgebildet sein kann.

Bei der bekannten Ausbildung ist die individuelle Anordnung und Befestigung der funktionellen Bauteile in dem Gehäuse erforderlich, was einen hohen Montageaufwand mit sich bringt und hohe Montageungenauigkeiten, weil die Montagegenauigkeit davon abhängt, wie genau und mit welchen Toleranzen die einzelnen Komponenten in dem Gehäuse befestigt werden. Zudem ist die elektrische Kontaktierung des Aktors jeweils individuell innerhalb des Gehäuses durchzuführen, so dass für jeden unterschiedlichen Anwendungszweck unterschiedliche Verbindungsanordnungen innerhalb des Gehäuses zur Verfügung gestellt werden müssen.

Dabei ist es auch üblich, den Aktor, insbesondere den Elektromagneten, mit einem kundenspezifischen Stecker zu fertigen, so dass für jeden Kunden resp. Einsatzzweck unterschiedliche Aktoren mit Steckern gefertigt werden müssen.

Ausgehend von diesem Stand der Technik liegt der Erfindung die Aufgabe zugrunde, eine Vorrichtung gattungsgemäßer Art zu schaffen, die in einfacher weise mit hoher Genauigkeit montiert und zusammengesetzt werden kann, wobei einzelne Funktionsteile austauschbar sind, sich sämtliche Funktionsteile in einem Gehäuse befinden und die individuellen Anschlüsse für externe Stromquellen oder dergleichen typischerweise nach außerhalb des Gehäuses verlegt sind.

Die Lösung dieser Aufgabe ist im Anspruch 1 angegeben.

Dadurch, dass das Gehäuse eine dem Aktor beziehungsweise dem Elektromagneten formmäßig angepasste Konturierung aufweist, ist es möglich, das entsprechende Bauteil in die Konturierung des Gehäuses einzufügen, so dass unmittelbar die ordnungsgemäße und genaue Anordnung innerhalb des Gehäuses sichergestellt ist, ohne dass weitere Maßnahmen dazu erforderlich sind. Ungenauigkeiten, die sich aus einer ungeschickten Handhabung ergeben könnten, sind damit vermieden. Zusätzlich sind im Gehäuse Lagerstellen für sämtliche Klinken des Klinkengesperres ausgebildet, so dass auch die Anordnung der Klinken des Klinkengesperres in einfacher Weise und äußerst genau erfolgen kann, ohne dass individuelle Fehler auftreten können. Zudem erfolgt auch die elektrische Verbindung und Verdrahtung des Aktors standardmäßig mit einem am Gehäuse angebrachten oder angeformten Stecker, so dass der gleiche Aktor für diverse Anwendungen verwendet werden kann, bei denen lediglich das Gehäuse und der gehäuseseitige Stecker individuell nach Kundenanforderung zu fertigen sind.

Bei der Formgebung wird lediglich das Gehäuse und gegebenenfalls der Stecker dem individuellen Einsatzzweck oder den Kundenwunsch entsprechend angepasst. Die Bauteile, die innerhalb des Gehäuses angeordnet werden, können stets identisch ausgebildet sein, wobei entsprechende Installationsplätze innerhalb des Gehäuses vorgesehen sind.

Wie an sich bekannt, weist das Gehäuse eine Aussparung zum Eingriff des mit der Verriegelungsklinke in Eingriff bringbaren Bauteiles auf. Durch die Vorrichtung wird ein Entriegelungssystem zur Verfügung gestellt, welches eine kompakte geschlossene Baueinheit bildet und bei dem einzelne Funktionsteile der Einheit austauschbar sind.

Eine besonders bevorzugte Weiterbildung wird darin gesehen, dass die Lagerstellen für die Betätigungsklinke und für die Sperrklinke durch am Gehäuse angebrachte oder angeformte Bolzen gebildet sind.

Dadurch, dass die entsprechenden Bolzen oder dergleichen am Gehäuse angebracht, insbesondere angeformt sind, werden Toleranzen bei der Anordnung und Befestigung der Bolzen vermieden, weil insbesondere bei der einstückigen Anformung der Bolzen keine Toleranzen zwischen der Anordnung der Bolzen und der Ausformung der Konturierung zur Aufnahme des Aktors entstehen.

Besonders bevorzugt ist zudem vorgesehen, dass die Lagerstelle für die verriegelungsklinke durch einen das Gehäuse an Lagerstellen durchgreifenden Bolzen gebildet ist, der an gestellfesten Bestandteilen eines Bauteiles befestigt oder gelagert ist, das Teil eines Elementes ist, an dem das bewegliche Bauteil angeordnet ist.

Durch diese Ausbildung wird erreicht, dass dieser Hauptbolzen die Kraftübernahme und die Justage des Systems bei der Montage an dem entsprechenden Bauteil funktionsmäßig übernimmt. Das entsprechende Bauteil, an dem die Vorrichtung angeordnet wird, weist eine entsprechende Ausnehmung oder Aufnahme auf, in welcher die Enden des Bolzens gelagert oder befestigt werden können. Hiermit ist das gesamte System dann bezüglich der zu bewegenden Bauteile justiert, wobei zudem die Krafteinleitung des Systems im Wesentlichen, nahezu ausschließlich, in diesen Bolzen erfolgt, nicht aber über Gehäuseteile oder sonstige Bestandteile der Vorrichtung.

Zudem ist bevorzugt vorgesehen, dass das Gehäuse aus einem Unterteil und einem Oberteil besteht, wobei die beiden Teile miteinander verbindbar, verriegelbar, verrastbar, verschweißbar oder verklebbar sind, und zwischen sich sämtliche Funktionsteile umgeben.

Auch kann vorgesehen sein, dass die Gehäuseteile durch Anordnung mindestens einer Dichtung ein abgedichtetes Gehäuse bilden, wobei lediglich die Aussparung, in der das Ende der verriegelungsklinke liegt, nach außen offen ist, so dass das mit der verriegelungsklinke in Eingriff bringbare Bauteil in die Aussparung eingreifen kann.

Eine solche Anordnung ist vor allem dann erforderlich und hilfreich, wenn ein Bedarf zum erhöhten Schutz gegen das Eindringen von Fremdkörpern und/oder Flüssigkeiten besteht.

Unter Umständen ist es auch ausreichend, wenn nur der Einbauplatz des Aktors, insbesondere des Elektromagneten, durch eine Dichtung nach außen abgedichtet ist, die zwischen den Gehäuseteilen in dem den Aktor umgebenden Bereich angeordnet ist.

Um die Herstellung weiterhin zu vereinfachen, ist vorgesehen, dass die Anschlussteile zur Verbindung des Aktors mit dem Stecker durch in das Gehäuse eingeformte oder in das Gehäuse eingelegte Kontakte, Stanzgitter, Kabel, starre oder flexible Schaltungsträger oder dergleichen zur Stromführung geeignete Elemente gebildet sind. Die Schaltungsträger sind insbesondere in Form gedruckter Schaltungen ausgebildet.

Zudem kann vorgesehen sein, dass das Gehäuse aus urgeformten Teilen besteht.

Beispielsweise kann das Gehäuse aus Kunststoff gespritzt oder auch aus Gussmaterial gegossen sein. Selbstverständlich ist es auch möglich, ein entsprechendes Gehäuse aus Stahl zu stanzen und/oder umzuformen.

Zudem kann auch vorgesehen sein, dass im Gehäuse ein Einbauplatz für einen Sensor oder Schalter für Diagnosezwecke vorgesehen ist, in den ein Sensor oder Schalter eingesetzt und fest gehalten ist, wobei der Sensor oder Schalter von einer der Klinken des Klinkengesperres betätigbar oder beeinflussbar ist und mit einem elektronischen Bauteil gekoppelt ist.

Auch ist vorgesehen, dass zwischen der Betätigungsklinke und der Verriegelungsklinke eine Feder angeordnet ist, die bei gespannter, nicht ausgelöster Vorrichtung vorgespannt ist.

Als Feder kann beispielsweise eine Schraubenfeder oder eine Schenkelfeder eingesetzt werden. Es ist auch möglich, sowohl der Betätigungsklinke als auch der verriegelungsklinke jeweils eine Feder zuzuordnen, die sich zum Beispiel an Gehäuseteilen abstützt, um die Klinken bei nicht bestromtem Aktor in ihrer Position zu fixieren beziehungsweise nach Bestromung des Aktors die Kliniken wieder in ihre Ausgangsposition zurückzustellen.

Des Weiteren kann vorgesehen sein, dass das Gehäuse Laschen oder Aufnahmen für Befestigungselemente aufweist, mittels derer das Gehäuse gestellfest an umgebenden Bauelementen befestigbar ist.

Auch kann vorgesehen sein, dass im Gehäuse ein Einbauplatz für eine Ansteuerelektronik vorgesehen ist.

Für die individuelle Ausbildung der vorrichtung je nach Kundenwunsch ist es lediglich erforderlich, das entsprechende Gehäuse gegebenenfalls mit angeformtem kundenspezifischem Anschlussstecker zu fertigen. In dieses Gehäuse können dann die standardisierten Bauteile des Klinkengesperres sowie der Aktor und dergleichen Teile eingesetzt werden. Durch entsprechende Bemessung oder durch Anordnung von Stegen oder dergleichen im Bereich der Konturierung zur Aufnahme des Aktors ist es auch möglich, unterschiedlich bemessene Aktoren einzubauen und lagesicher zu halten. Für unterschiedliche Entriegelungsanforderungen kann diese Vorrichtung schnell angepasst werden, da sehr viele Gleichteile verwendet werden und Funktionsteile standardisiert sind. In üblicher Weise kann die Vorrichtung reversibel entriegelt werden. Bei den herkömmlichen Vorrichtungen kann die Vorrichtung dem jeweiligen Bauraum inklusive der individuellen Befestigung schnell angepasst werden, da lediglich das Gehäuse gegebenenfalls mit Anschlussstecker individuell zu fertigen ist, während die Funktionselemente standardisierte Bauteile sind. Durch das erfindungsgemäße Baukastenprinzip können Entwicklungsaufwendungen niedrig gehalten werden, wobei beispielsweise ein Aktor-Typ für verschiedene Kunden verwendet werden kann und auf ein und derselben vollautomatischen Fertigungslinie montiert werden kann. Der Abnehmer erhält eine "Black Box"-Entriegelungseinheit, die schnell eingebaut werden kann. Die Einleitung von Kräften des Systems erfolgt über das zu verriegelnde Bauteil in die Verriegelungsklinke und auf den Bolzen, der die Verriegelungsklinke trägt, wobei dieser Bolzen an Karosserieteilen oder dergleichen befestigt und gehalten ist, so dass eine unmittelbare Krafteinleitung in die umgebenden Bauteile erfolgt. Die Belastung des Gehäuses und der übrigen Bestandteile der Vorrichtung ist demgegenüber vernachlässigbar.

Ausführungsbeispiele der Erfindung sind in der Zeichnung dargestellt und im Folgenden näher beschrieben. Es zeigt:
- Figur 1: eine erste Ausführungsform der vorrichtung in Ansicht bei geöffnetem Gehäuse;
- Figur 2: eine Variante in gleicher Ansicht;
- Figur 3: eine weitere Variante in gleicher Ansicht;

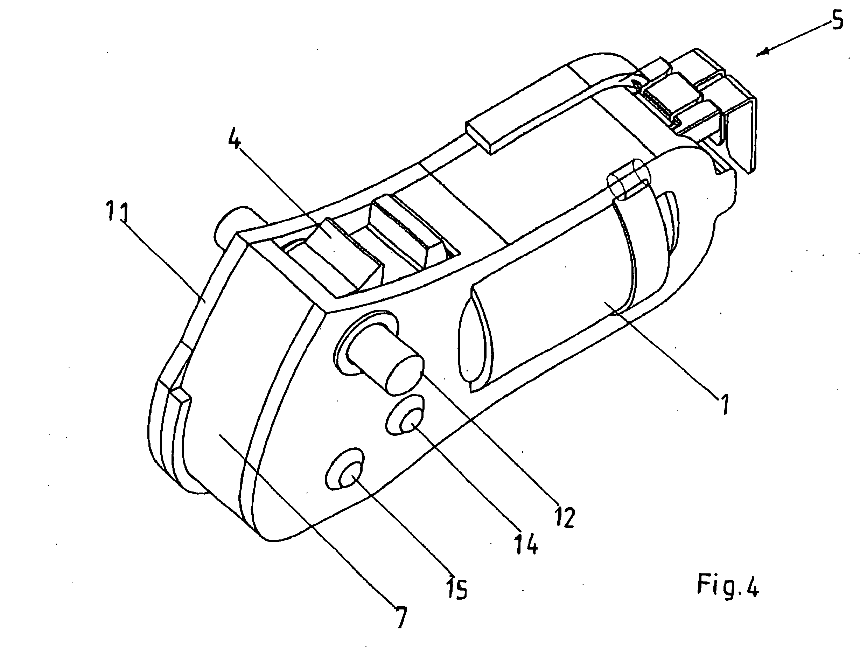

- Figur 4: die Variante bei geschlossenem Gehäuse;

In der Zeichnung ist eine Vorrichtung zur Verriegelung und schnellen Entriegelung von beweglichen Bauteilen gezeigt. Solche Vorrichtungen dienen insbesondere zur Verriegelung und Entriegelung von Sicherheitsbauteilen wie Überrollbügeln, Kopfstützen, Stossfängern, Gurtstraffern, SitzVerstellungen, -entriegelung oder dergleichen von Kraftfahrzeugen im Crashfall oder bei Komfortentriegelung. Die Vorrichtung besteht aus einem Aktor 1, insbesondere einem Elektromagneten mit Stößel 1a, sowie einem Klinkengesperre mit einer Betätigungsklinke 2, die vom Stößel la betätigbar ist, einer Sperrklinke 3, die durch die Betätigungsklinke in der Normalgebrauchslage verriegelt ist und im Crashfall oder bei Komfortentriegelung von der Betätigungsklinke 2 freigegeben wird, wobei die Sperrklinke 3 eine verriegelungsklinke 4 in der Normalgebrauchslage verriegelt und in der Komfortentriegelung oder in der crashbedingten, durch den Aktor 1 betätigten Lage freigibt, so dass sie unter der Kraft einer Stellfeder oder dergleichen in die Auslöseposition verstellt ist. Die Verriegelungsklinke 4 weist dabei ein Maul auf, in welchem ein Bügel, Bolzen oder dergleichen des zu sichernden Bauteiles gehalten ist. Die Klinken 2 bis 4 sind jeweils um gestellfeste Achsen drehbeweglich. Alle Bestandteile sind in einem Gehäuse angeordnet, welches aus einer Halbschale 11 und einer die Halbschale abdeckenden weiteren Halbschale 7 besteht. Beide Gehäusehalbschalen 7,11 weisen eine dem Aktor 1 formmäßig angepasste Konturierung auf, in welcher der Aktor unbeweglich und unverschieblich gehalten ist.

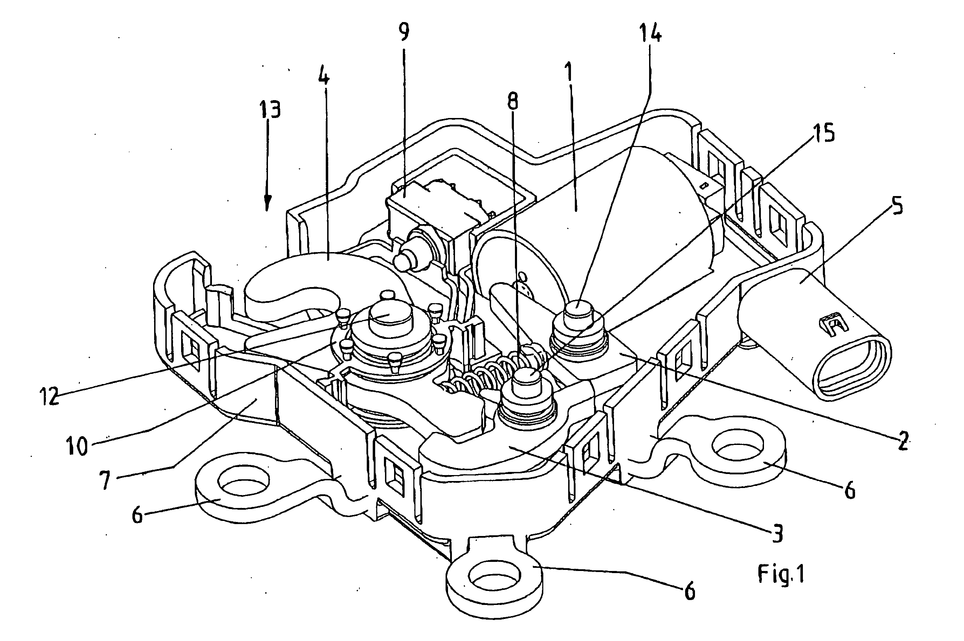

Die Gehäusekonturierung kann durch eine entsprechende Formung des Gehäuses vorgegeben sein, wie beispielsweise in Figur 1 veranschaulicht ist. Im Gehäuse sind Lagerstellen für sämtliche Klinken 2 bis 4 des Klinkengesperres ausgebildet, um welche die Klinken 2 bis 4 begrenzt drehbar gelagert sind. Zudem sind die Klinken 2 bis 4 an den entsprechenden Lagerstellen befestigt. Zusätzlich sind im Gehäuse Anschlussteile angeordnet, mittels derer der Aktor 1 mit einem am Gehäuse angebrachten oder mit diesem einstückig ausgebildeten Stecker 5 verbunden ist. Der Stecker 5 ist ebenso wie die Gehäuseschalen als individuelles Bauteil ausgebildet, welches dem Abnehmerwunsch entspricht. Die im Gehäuse angeordneten Elemente sind unabhängig von der Gehäuseform und der Ausbildung des Steckers 5 jeweils gleiche Teile, so dass eine serielle Fertigung mit modularem Aufbau ermöglicht ist. Zusätzlich weist das Gehäuse eine Aussparung 13 auf, durch die das Verriegelungsende der Verriegelungsklinke 4 zugreiflich ist und/oder in welche Ausnehmung ein zu verriegelndes Element eingreifen kann, welches mit der Verriegelungsklinke 4 in Eingriff ist.

Die Lagerstelle für die Betätigungsklinke 2 und ebenso die Lagerstelle für die Sperrklinke 3 ist vorzugsweise durch jeweils einen am Gehäuse angeformten Bolzen 14 beziehungsweise 15 gebildet. Diese Bolzen sind an der einen Gehäuseschale angeformt, während die andere Gehäuseschale eine entsprechende Aufnahme für die Bolzenenden aufweist. Durch diese Anordnung ist eine exakte Zuordnung des Aktors 1 zu der Betätigungsklinke 2 und der Sperrklinke 3 erreicht, so dass eine einfache exakte Justage beim Zusammenbau erfolgt.

Die Lagerstelle für die Verriegelungsklinke 4 ist durch einen das Gehäuse an Lagerstellen durchgreifenden Bolzen 12 gebildet, der beidseits aus dem Gehäuse herausragt und an gestellfesten Bestandteilen beispielsweise eines Kraftfahrzeuges befestigt oder gelagert ist. Hierdurch ist es beim Einbau der Vorrichtung in ein entsprechendes Kraftfahrzeug oder dergleichen in einfacher Weise möglich, das System zu justieren und zudem erfolgt die Kraftübertragung unmittelbar über diesen Bolzen 12 in die Karosseriestruktur oder dergleichen, so dass die Vorrichtung ansonsten durch Auslöse- oder Verriegelungskräfte nicht beeinträchtigt ist.

Die beiden Halbschalen 7,11 sind miteinander beispielsweise rastbar verbunden. Zusätzlich ist es möglich, in der Gehäusetrennfuge zwischen den beiden Halbschalen 7,11 eine Dichtung oder dergleichen anzuordnen, die auch in dem den Bolzen 12 umgebenden Bereich vorgesehen ist (Dichtung 10), so dass ein Eindringen von Staub oder Feuchtigkeit in das Gehäuse unterbunden ist, mit Ausnahme im Bereich der Ausnehmung 13.

Unter Umständen ist es auch ausreichend, wenn nur der Einbauplatz des Aktors, insbesondere des Elektromagneten, durch eine Dichtung nach außen abgedichtet ist, die zwischen den Gehäuseteilen in dem den Aktor umgebenden Bereich angeordnet ist.

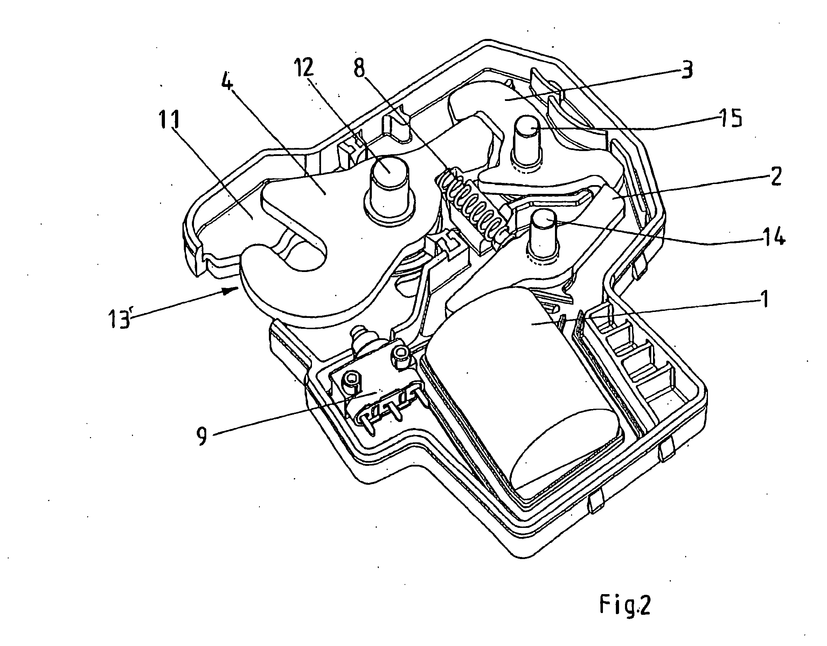

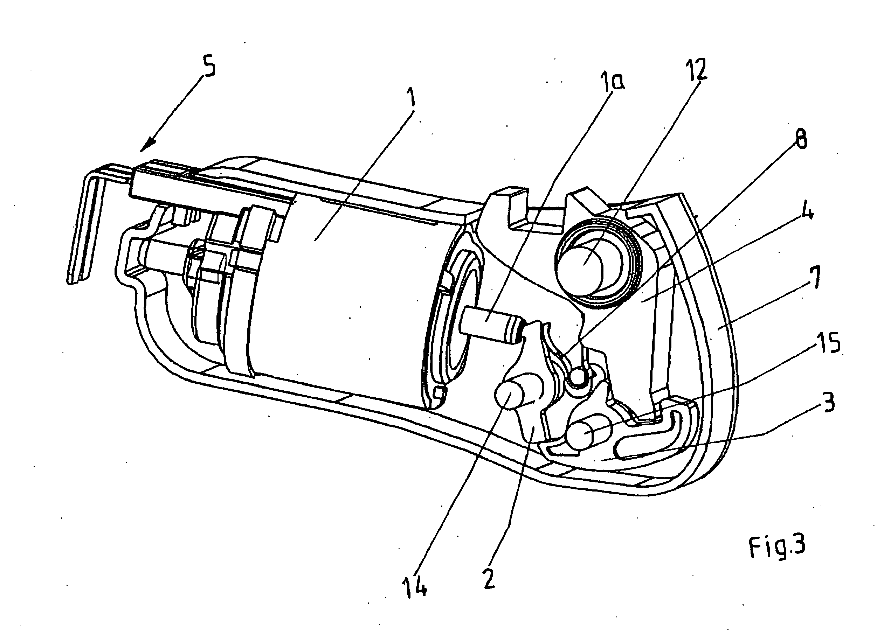

Zusätzlich weisen die Gehäusehalbschalen 7,11 einen konturierten Einbauplatz für einen Sensor oder Schalter 9 auf, der ebenso durch diesen formmäßig angepassten Einbauplatz lagerichtig und sicher gehalten ist. Des Weiteren ist zwischen der Betätigungsklinke 2 und der verriegelungsklinke 4 noch eine Feder 8 vorgesehen, mittels derer beim Verriegeln der Verriegelungsklinke 4 mit dem entsprechendem Kraftfahrzeugbauteil eine Rückführung der Betätigungsklinke 2 in die Grundstellung erfolgt, die in den Zeichnungen gezeigt ist. In den Figuren 1 und 2 ist die Feder 8 eine Schraubendruckfeder. In Figur 3 ist die Feder 8 eine Schenkelfeder.

Die Erfindung ist nicht auf das Ausführungsbeispiel beschränkt, sondern im Rahmen der Offenbarung vielfach variabel.

## Patentansprüche

1. Vorrichtung zur Verriegelung und schnellen Entriegelung von beweglichen Bauteilen, bestehend aus einem Aktor (1), insbesondere einem Elektromagneten mit Stößel (1a), und einem Klinkengesperre, welches einerseits mit dem Aktor (1) oder dem Stößel (1a) und andererseits mit dem beweglichen Bauteil gekoppelt oder wirkverbunden ist, wobei die Klinken des Klinkengesperres um gestellfeste Achsen drehbeweglich sind und die Vorrichtungsbestandteile in einem Gehäuse angeordnet sind, welches ortsfest montierbar und dem beweglichen Bauteil zuzuordnen ist, wobei die Vorrichtung wahlweise eine Ansteuerelektronik umfasst, wobei das Gehäuse (7,11) eine dem Aktor (1) oder Elektromagneten formmäßig angepasste Konturierung aufweist, in welcher der Aktor (1) oder Elektromagnet unbeweglich und unverschieblich gehalten ist, im Gehäuse Lagerstellen für sämtliche Klinken des Klinkengesperres ausgebildet sind, um welche die Klinken begrenzt drehbar gelagert sind und an denen die Klinken befestigt sind und wobei das Gehäuse (7,11) eine Aussparung (13) zum Eingriff eines mit einer Verriegelungsklinke (4) in Eingriff bringbaren Bauteils aufweist, **dadurch gekennzeichnet, dass** das Gehäuse (7,11) Anschlussteile zur Verbindung des Aktors (1) mit einem am Gehäuse angebrachten oder angeformten Stecker (5) aufweist, wobei der Stecker (5) individuell an ein externes Anschlussmittel angepasst ist und dass das Klinkengesperre die Verriegelungsklinke (4), eine Betätigungsklinke (2) und eine Sperrklinke (3) aufweist, wobei die Betätigungsklinke (2) von dem Aktor (1) unmittelbar betätigbar ist, die Sperrklinke (3) mit der Betätigungsklinke (2) und der Verriegelungsklinke (4) in Wirkverbindung ist, und die Verriegelungsklinke (4) mit dem zu verriegelnden Bauteil in Wirkverbindung ist.

2. Vorrichtung nach Anspruch 1, **dadurch gekennzeichnet, dass** die Lagerstellen für die Betätigungsklinke (2) und für die Sperrklinke (3) durch am Gehäuse (7,11) angebrachte oder angeformte Bolzen (14,15) gebildet sind.

3. Vorrichtung nach einem der Ansprüche 1 oder 2, **dadurch gekennzeichnet, dass** die Lagerstelle für die verriegelungsklinke (4) durch einen das Gehäuse (7,11) an Lagerstellen durchgreifenden Bolzen (12) gebildet ist, der an gestellfesten Bestandteilen eines Bauteiles befestigt oder gelagert ist, das Teil eines Elementes ist, an dem das bewegliche Bauteil angeordnet ist.

4. Vorrichtung nach einem der Ansprüche 1 bis 3, **dadurch gekennzeichnet, dass** das Gehäuse (7,11) aus einem Unterteil und einem Oberteil besteht, wobei die beiden Teile miteinander verbindbar, verriegelbar, verrastbar, verschweißbar oder verklebbar sind, und zwischen sich sämtliche Funktionsteile umgeben.

5. Vorrichtung nach Anspruch 4, **dadurch gekennzeichnet, dass** die Gehäuseteile (7,11) durch Anordnung mindestens einer Dichtung (10) ein abgedichtetes Gehäuse bilden, wobei lediglich die Aussparung (13), in der das Ende der verriegelungsklinke (4) liegt, nach außen offen ist, so dass das mit der verriegelungsklinke (4) in Eingriff bringbare Bauteil in die Aussparung eingreifen kann.

6. Vorrichtung nach einem der Ansprüche 1 bis 4, **dadurch gekennzeichnet, dass** nur der Einbauplatz des Aktors (1), insbesondere des Elektromagneten, durch eine Dichtung nach außen abgedichtet ist, die zwischen den Gehäuseteilen (7,11) in dem den Aktor (1) umgebenden Bereich angeordnet ist.

7. Vorrichtung nach einem der Ansprüche 1 bis 6, **dadurch gekennzeichnet, dass** die Anschlussteile zur Verbindung des Aktors (1) mit dem Stecker (5) durch in das Gehäuse (7, 11) eingeformte oder in das Gehäuse eingelegte Kontakte, Stanzgitter, Kabel, starre oder flexible Schaltungsträger oder dergleichen zur Stromführung geeignete Elemente gebildet sind.

8. Vorrichtung nach einem der Ansprüche 1 bis 7, **dadurch gekennzeichnet, dass** das Gehäuse (7,11) aus urgeformten Teilen besteht.

9. Vorrichtung nach einem der Ansprüche 1 bis 8, **dadurch gekennzeichnet, dass** im Gehäuse (7,11) ein konturierter Einbauplatz für einen Sensor oder Schalter (9) für Diagnosezwecke vorgesehen ist, in den ein Sensor oder Schalter (9) passend eingesetzt und fest gehalten ist, wobei der Sensor oder Schalter (9) von einer der Kliniken des Klinkengesperres betätigbar oder beeinflussbar ist und mit einem oder mehreren elektronischen Bauteilen gekoppelt ist.

10. Vorrichtung nach einem der Ansprüche 1 bis 9, **dadurch gekennzeichnet, dass** zwischen der Betätigungsklinke (2) und der Verriegelungsklinke (4) eine Feder (8) angeordnet ist, die bei gespannter, nicht ausgelöster Vorrichtung vorgespannt ist.

11. Vorrichtung nach einem der Ansprüche 1 bis 10, **dadurch gekennzeichnet, dass** das Gehäuse (7,11) Laschen (6) oder Aufnahmen für Befestigungselemente aufweist, mittels derer das Gehäuse gestellfest an umgebenden Bauelementen befestigbar ist.

12. Vorrichtung nach einem der Ansprüche 1 bis 11, **dadurch gekennzeichnet, dass** im Gehäuse (7,11) ein Einbauplatz für eine Ansteuerelektronik vorgesehen ist.

13. Vorrichtung nach Anspruch 12, **dadurch gekennzeichnet, dass** die Anschlussteile zur elektrischen Verbindung des Aktors (1) mit der Ansteuerelektronik durch in das Gehäuse (7,11) eingeformte oder eingelegte Stanzgitter oder durch starre oder flexible Schaltungsträger oder Kabel oder andere zur Stromführung geeignete Elemente gebildet sind.

## Claims

1. A device for locking and quickly unlocking movable components, said device consisting of an actuator (1), in particular an electromagnet with a tappet (1a), and a pawl mechanism, which is coupled or in operative communication with the actuator (1) or the tappet (1a) on the one hand and with the movable component on the other hand,
wherein the pawls of the pawl mechanism can rotate around pivots fixed to the frame and the components of the device are disposed in a housing which can be fixedly mounted and is to be assigned to the movable component,
wherein the device optionally includes control electronics,
wherein the housing (7, 11) comprises contouring that is adapted to the shape of the actuator (1) or electromagnet and in which the actuator (1) or electromagnet is immovably and non-displaceably held, in the housing bearing positions for all pawls of the pawl mechanism are formed, around which the pawls are mounted for limited rotation and to which the pawls are attached,
and wherein the housing (7, 11) comprises a recess (13) for the engagement of a component that can be brought into engagement with a locking pawl (4),
**characterised in that** the housing (7, 11) comprises connection parts to connect the actuator (1) with a plug (5) that is mounted or moulded on the housing, the plug (5) being individually adapted to an external connection means, and **in that** the pawl mechanism comprises the locking pawl (4), an actuating pawl (2) and a detent pawl (3), it being possible to directly actuate the actuating pawl (2) by the actuator (1), the detent pawl (3) being in operative communication with the actuating pawl (2) and the locking pawl (4), and the locking pawl (4) being in operative communication with the component to be locked.

2. A device according to Claim 1,
**characterised in that** the bearing positions for the actuating pawl (2) and for the detent pawl (3) are formed by bolts (14, 15) that are mounted or moulded on the housing (7, 11).

3. A device according to one of Claims 1 or 2,
**characterised in that** the bearing position for the locking pawl (4) is formed by a bolt (12) passing through the housing (7, 11) at bearing positions, and said bolt is fixed to or mounted on frame-mounted components of a subassembly that is part of an element on which the movable component is disposed.

4. A device according to one of Claims 1 to 3,
**characterised in that** the housing (7, 11) consists of a lower part and an upper part, wherein it is possible to connect, lock, snap, weld or bond the two parts to each other, and the two parts between them surround all functional parts.

5. A device according to Claim 4,
**characterised in that** the housing parts (7, 11) form a sealed housing by the provision of at least one seal (10),
wherein only the recess (13) in which the end of the locking pawl (4) lies is open to the outside, so that the component that can be brought into engagement with the locking pawl (4) can engage in the recess.

6. A device according to one of Claims 1 to 4,
**characterised in that** only the installation space for the actuator (1), especially the electromagnet, is sealed from the outside by a seal that is disposed between the housing parts (7, 11) in the region surrounding the actuator (1).

7. A device according to one of Claims 1 to 6,
**characterised in that** the connection parts for connecting the actuator (1) to the plug (5) are formed by contacts, punched wire mesh, cables, rigid or flexible circuit carriers that are moulded into the housing (7, 11) or that are inserted into the housing or similar elements that are suitable for carrying current.

8. A device according to one of Claims 1 to 7,
**characterised in that** the housing (7, 11) consists of primary shaped parts.

9. A device according to one of Claims 1 to 8,
**characterised in that** in the housing (7, 11) there is provided a contoured installation space for a sensor or switch (9) for diagnostic purposes, into which a sensor or switch (9) is fitted and is securely held, it being possible to actuate or influence the sensor or switch (9) by one of the pawls of the pawl mechanism and the sensor or switch (9) being coupled with one or more electronic components.

10. A device according to one of Claims 1 to 9,
**characterised in that** between the actuating pawl (2) and the locking pawl (4) there is disposed a spring (8), which is biased when the device is in the tensioned, non-triggered state.

11. A device according to one of Claims 1 to 10,
**characterised in that** the housing (7, 11) comprises lugs (6) or seats for attachment elements, by means of which the housing can be fixed to surrounding structural elements whilst being secured to the frame.

12. A device according to one of Claims 1 to 11,
**characterised in that** an installation space for control electronics is provided in the housing (7, 11).

13. A device according to Claim 12,
**characterised in that** the connection parts are formed to electrically connect the actuator (1) to the control electronics by punched wire mesh moulded or inserted into the housing (7, 11) or by rigid or flexible circuit carriers or other elements suitable for carrying current.

## Revendications

1. Dispositif pour verrouiller et déverrouiller rapidement des composants mobiles, se composant d'un actionneur (1), en particulier d'un électroaimant avec poussoir (1a), et d'un mécanisme de verrouillage à cliquet ou à encliquetage, lequel est couplé ou fonctionnellement lié, d'une part, avec l'actionneur (1) ou le poussoir (1a) et, d'autre part, avec le composant mobile, les cliquets du mécanisme de verrouillage à cliquet ou à encliquetage pouvant effectuer un mouvement de rotation autour d'axes solidaires du bâti et les éléments du dispositif étant disposés dans un boîtier qui peut être monté à un emplacement fixe et qui est à associer au composant mobile, le dispositif comprenant au choix une électronique de commande, le boîtier (7, 11) présentant un contourage dont la forme est adaptée à l'actionneur (1) ou à l'électroaimant, dans lequel l'actionneur (1) ou l'électroaimant est tenu sans possibilité de déplacement ni de coulissement, des points d'appui ou de logement étant formés dans le boîtier pour tous les cliquets du mécanisme de verrouillage à cliquet ou à encliquetage, autour desquels les cliquets sont montés à rotation limitée et auxquels les cliquets sont fixés, et le boîtier (7, 11) présentant un évidement (13) pour l'engagement d'un composant pouvant être mis en prise avec un cliquet de verrouillage (4), **caractérisé en ce que** le boîtier (7, 11) présente des pièces de connexion pour relier l'actionneur (1) à une fiche (5) montée ou formée sur le boîtier, la fiche (5) étant adaptée individuellement à un moyen de connexion externe, et que le mécanisme de verrouillage à cliquet ou à encliquetage présente le cliquet de verrouillage (4), un cliquet d'actionnement (2) et un cliquet d'arrêt (3), le cliquet d'actionnement (2) pouvant être actionné directement par l'actionneur (1), le cliquet d'arrêt (3) étant en liaison fonctionnelle avec le cliquet d'actionnement (2) et le cliquet de verrouillage (4), et le cliquet de verrouillage (4) étant en liaison fonctionnelle avec le composant à verrouiller.

2. Dispositif selon la revendication 1, **caractérisé en ce que** les points d'appui ou de logement pour le cliquet d'actionnement (2) et pour le cliquet d'arrêt (3) sont formés par des axes ou tourillons (14, 15) montés ou formés sur le boîtier (7, 11).

3. Dispositif selon l'une des revendications 1 ou 2, **caractérisé en ce que** le point d'appui ou de logement pour le cliquet de verrouillage (4) est formé par un axe ou tourillon (12) traversant le boîtier (7, 11) au niveau des points d'appui ou le logement, qui est fixé ou monté sur des éléments solidaires du bâti d'un composant qui fait partie d'un élément sur lequel le composant mobile est disposé.

4. Dispositif selon l'une des revendications 1 à 3, **caractérisé en ce que** le boîtier (7, 11) se compose d'une partie inférieure et d'une partie supérieure, les deux parties pouvant être reliées, verrouillées, encliquetées, soudées ou collées ensemble et entourant entre elles toutes les pièces fonctionnelles.

5. Dispositif selon la revendication 4, **caractérisé en ce que** les parties de boîtier (7, 11) forment un boîtier rendu étanche par disposition d'au moins un joint (10), seul l'évidement (13) dans lequel se trouve l'extrémité du cliquet de verrouillage (4) étant ouvert vers l'extérieur de façon que le composant pouvant être mis en prise avec le cliquet de verrouillage (4) puisse s'engager dans l'évidement.

6. Dispositif selon l'une des revendications 1 à 4, **caractérisé en ce que** seul l'emplacement de montage de l'actionneur (1), en particulier de l'électroaimant, est rendu étanche vers l'extérieur par un joint qui est disposé entre les parties de boîtier (7, 11) dans la zone qui entoure l'actionneur (1).

7. Dispositif selon l'une des revendications 1 à 6, **caractérisé en ce que** les pièces de connexion servant à relier l'actionneur (1) à la fiche (5) sont formées par des contacts, des grilles estampées, des câbles, des supports de circuit rigides ou flexibles ou des éléments analogues aptes à conduire du courant électrique formés dans le boîtier (7, 11) ou posés dans le boîtier.

8. Dispositif selon l'une des revendications 1 à 7, **caractérisé en ce que** le boîtier (7, 11) se compose de pièces coulées.

9. Dispositif selon l'une des revendications 1 à 8, **caractérisé en ce qu'**il est prévu dans le boîtier (7, 11) un emplacement de montage contouré pour un capteur ou commutateur (9) aux fins de diagnostic, dans lequel un capteur ou commutateur (9) est monté en ajustement et maintenu bloqué, le capteur ou commutateur (9) pouvant être actionné ou influencé par un des cliquets du mécanisme de verrouillage à cliquet ou à encliquetage et étant couplé à un ou plusieurs composants électroniques.

10. Dispositif selon l'une des revendications 1 à 9, **caractérisé en ce qu'**un ressort (8) est disposé entre le cliquet d'actionnement (2) et le cliquet de verrouillage (4), lequel ressort (8) est sous tension préalable quand le dispositif est tendu et non déclenché.

11. Dispositif selon l'une des revendications 1 à 10, **caractérisé en ce que** le boîtier (7, 11) présente des pattes (6) ou des logements pour des éléments de fixation, au moyen desquelles le boîtier peut être fixé de manière solidaire du bâti à des composants environnants.

12. Dispositif selon l'une des revendications 1 à 11, **caractérisé en ce qu'**il est prévu dans le boîtier (7, 11) un emplacement de montage pour une électronique de commande.

13. Dispositif selon la revendication 12, **caractérisé en ce que** les pièces de connexion servant à relier l'actionneur (1) à l'électronique de commande sont formées par des grilles estampées formés ou posés dans le boîtier (7, 11) ou par des supports de circuit rigides ou flexibles, des câbles ou d'autres éléments analogues aptes à conduite du courant électrique.
